# EUROPEAN PATENT APPLICATION

(11) **EP 1 541 626 A1**
(43) Date of publication of application: **15.06.2005**
(21) Application number: 04256901.2
(22) Date of filing: 08.11.2004
(51) Int. Cl.: C08K 5/00, C08L 27/02

(54) **Thermal stabilizer composition for halogen-containing vinyl polymers**

(30) Priority: 19.11.2003 US 523366 P
(71) Applicant: Rohm and Haas Company, Philadelphia, Pennsylvania 19106-2399 (US)
(72) Inventor: Norris, Gene Kelly, West Chester Ohio 45069 (US)
(74) Representative: Buckley, Guy Julian

(57) **Abstract**

Stabilizer compositions are employed to stabilize filled halogen-containing vinyl polymers from, for example, degradation and discoloration. The stabilizer compositions comprise a mercaptan-containing organic compound; and a zinc salt in an amount effective to provide 0.075 to 1.5 parts by weight of zinc, based on 100 parts by weight of the halogen-containing vinyl polymers.

## Description

### BACKGROUND

The present invention relates to stabilizer compositions for halogen-containing vinyl polymers, the stabilized halogen-containing vinyl polymer compositions and articles formed therefrom, and methods for stabilizing halogen-containing vinyl polymers.

Halogen-containing vinyl polymers, for example, poly(vinyl chloride), copolymers of vinyl chloride and vinyl acetate, and poly(vinylidine chloride), are commonly used for fabricating a variety of articles such as pipes, window casings, siding, bottles, wall covering and packaging film. There have been many attempts to add stabilizers to halogen-containing vinyl polymers to ameliorate the color changes that can occur in the polymer resins, particularly those color changes that occur during the first one to ten minutes of processing. Zinc salts are useful stabilizers that can significantly reduce the color changes observed in halogen-containing vinyl polymers in the early stages of processing. A disadvantage of the zinc salts as thermal stabilizers is that, during processing, sudden and catastrophic degradation can occur, leading to the phenomenon known as "zinc burn".

Other compounds such as organothio compounds and mercaptan-containing organic compounds have been added as co-stabilizers with zinc salts to improve stabilization at the later stages of processing. For example, U.S. Patent No. 3,067,166 to Zaremsky et al. discloses stabilizers containing low levels of zinc compounds and mercaptoesters, for example, stearyl thiogylcolate. The zinc compound is present in an amount effective to provide 0.002 to 0.05 parts by weight of zinc per 100 parts by weight of the PVC, but the inventors hereof have found that the level of stabilization provided by these compositions is less than satisfactory.

The problem addressed by the invention is the provision of stabilizer compositions for halogen-containing vinyl polymers, particularly stabilizer compositions that are more effective in protecting halogen-containing vinyl polymers from degradation and discoloration during processing or long-term use.

### STATEMENT OF THE INVENTION

In a first aspect, there is provided a stabilized polymeric composition comprising a halogen-containing vinyl polymer; a filler; a mercaptan-containing organic compound; and a zinc salt in an amount effective to provide 0.075 to 1.5 parts by weight of zinc metal per 100 parts by weight of the halogen-containing vinyl polymer.

In a second aspect, there is provided a stabilizer composition comprising a mercaptan-containing organic compound and a zinc salt in an amount effective to provide 0.075 to 1.5 parts by weight of zinc metal per 100 parts by weight of a halogen-containing vinyl polymer.

In a third aspect, there is provided a method of stabilizing a halogen-containing vinyl polymer comprising a filler, the method comprising adding to the halogen-containing vinyl polymer a mercaptan-containing organic compound; and a zinc salt in an amount effective to provide 0.075 to 1.5 parts by weight of zinc metal per 100 parts by weight of the halogen-containing vinyl polymer.

In a fourth aspect, there is provided an article comprising the above-described stabilized polymeric composition.

The disclosed stabilizer compositions surprisingly show improved stabilization in filled halogen-containing vinyl polymer compositions at relatively high levels of zinc salt (i.e., levels of 0.075 parts by weight to 1.5 parts zinc metal by weight per 100 parts by weight of the halogen-containing vinyl polymer). This result is unexpected, as U.S. Patent No. 3,067,166 to Zaremsky et al. teaches that "above or below the optimum concentration" of 0.002 to 0.50 parts zinc, "the stability of the composition diminishes in one respect or another" (Col. 3, lines 27-29).

### DETAILED DESCRIPTION

Suitable zinc salts for use in the above-described stabilizer compositions include, for example, inorganic salts such as zinc chloride, zinc oxide, zinc hydroxide, zinc carbonate, basic zinc carbonate, zinc sulfide or zinc borate, and organic salts such as zinc carboxylates, zinc enolates or zinc phenolates, and mixtures comprising any one or more of the foregoing zinc salts.

Suitable zinc carboxylates are the zinc salts of substituted or unsubstituted carboxylic acids having two to 30 carbon atoms. Preferably, the zinc carboxylate is a zinc salt represented by formula 1:

Zn[{OC(=O)}ₓR²]₂₋ₓ (1)

wherein x is zero or one, and each R² is the same or different and is a saturated or unsaturated, straight or branched chain alkyl group having 1 to 30 carbon atoms, preferably 1 to 17 carbon atoms. Suitable carboxylic acids for formation of the zinc salt include, for example, monocarboxylic acids such as acetic acid, butyric acid, octanoic acid, neodecanoic acid, 2-ethylhexanoic acid, undecanoic acid, palmitic acid, lauric acid, stearic acid, 9,10-dihydroxystearic acid, oleic acid, 3,6,9-trioxadecanoic acid, benzoic acid, p-tert-butylbenzoic acid, dimethylhydroxybenzoic acid, or glycolic acid; and divalent carboxylic acids and their monoesters, such as oxalic acid, malonic acid, succinic acid, glutaric acid, adipic acid, fumaric acid, octane-1,8-dicarboxylic acid, 3,6,9-trioxadecane-1,10-dicarboxylic acid, lactic acid, maleic acid, tartaric acid, polyglycoldicarboxylic acid (n=10-12), phthalic acid, terephthalic acid, and hydroxyphthalic acid; and the di- or triesters of tri- or tetravalent carboxylic acids, such as hemimellitic acid, trimellitic acid, pyromellitic acid, citric acid, and mixtures comprising any one or more of the foregoing acids.

The zinc enolates preferably comprise enolates of acetylacetone, benzoylacetone, dibenzoylmethane, acetoacetic acid esters, benzoylacetic esters, or of dehydroacetic acid, and mixtures comprising any one or more of the foregoing enolates.

The amount of zinc provided by the zinc salt is greater than about 0.075 phr. The particular amount of zinc will vary depending on the application, and is readily determined by one of ordinary skill in the art, depending on the halogen-containing vinyl polymer formulation, processing method, intended use, and like considerations. In general, a suitable amount of zinc provided by the zinc salt is 0.075 phr to 1.5 phr. As used herein, phr refers to parts by weight of a particular component per 100 parts by weight of the halogen-containing vinyl polymer. Within this range, an amount of greater than or equal to 0.075 phr can be employed, preferably greater than or equal to 0.1 phr, and more preferably greater than or equal to 0.15 phr. Also within this range, less than or equal to 1.5 phr can be employed, preferably less than or equal to 1.0 phr, and more preferably less than or equal to 0.75 phr. Greater than 2.0 phr can lead to mitigating effects and/or to the sudden degradation phenomenon known as zinc burn, while less than 0.075 phr does not provide the desired level of stabilization.

Suitable mercaptan-containing organic compounds include, for example, alkyl mercaptans, mercapto esters, mercapto alcohols, mercapto acids, and the like, having 1 to 100 carbon atoms and 1 to 4 mercapto groups. Suitable mercaptan-containing organic compounds have structures illustrated by the following formulas: 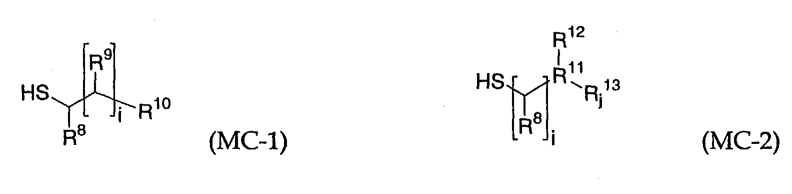 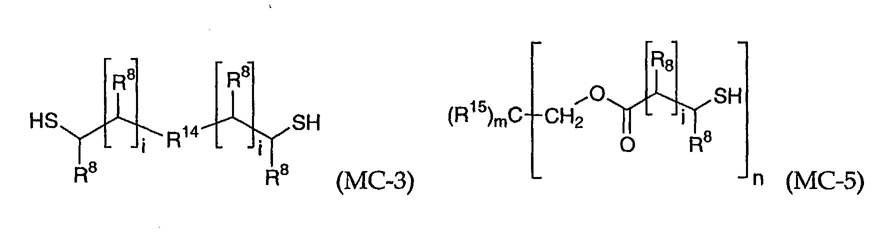 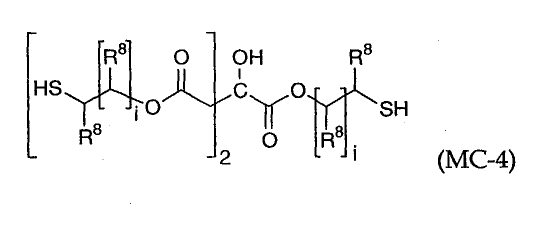 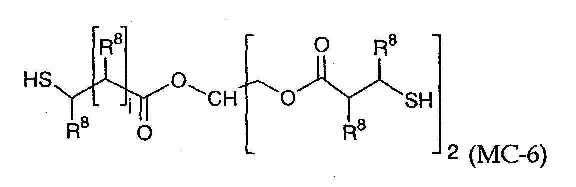 wherein
i=0-6; j=0-3; m=1-2; n=2-3, with the proviso that m + n=4;
R⁸ is -H, C₁₋₁₈ alkyl, or C₁₋₃₆ aryl;
R⁹ and R¹⁰ are each independently -H, -OH, -SH, C₁₋₁₈ alkyl, aryl, R¹⁶C(=O)O-, or R¹⁶OC(=O)-;
R¹¹ is cycloalkyl, cycloalkenyl, or phenyl;
R¹² is -H, -OH, -SH, C₁₋₁₈ alkyl, C₆₋₁₈ aryl, R¹⁶C(=O)O-, R¹⁶OC(=O)-, with the proviso that in formula MC2, when R¹¹ is phenyl, R¹² is -OH and i=0, the -SH groups are on non-adjacent carbon atoms;
R¹³ is -H or a divalent group which may contain halogen, hydroxy, mercapto or alkyl substituents and which when R¹¹ is phenyl combines with the phenyl to form a naphthalene ring;
R¹⁴ is divalent, and is -OC(=O)R¹⁷C(=O)O-, -OC(=O)CH=CHC(=O)O-, or -C(=O)OR¹⁷OC(=O)-;
R¹⁵ is C₁₋₁₂ alkyl, preferably -CH₃, -CH₂CH₃; C₁₋₁₂ hydroxyalkyl, preferably hydroxymethyl; or 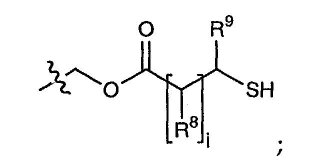
R¹⁶ is -H, C₁₋₂₄ alkyl, C₁₋₂₄ alkenyl, C₆₋₃₆ aryl, C₇₋₃₆ aralkyl, C₇₋₃₆ alkaryl, C₁₋₁₆ cycloalkyl, or C₁₋₃₆ cycloalkenyl; and
R¹⁷ is C₆₋₃₆ arylene, C₁₋₈ alkylenyl, -(CH₂CH₂O)_{b}CH₂CH₂- where b=1-6, or 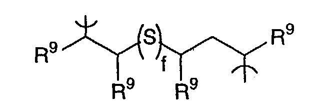 where f=1 or 2.

Preferably, the mercaptan-containing organic compounds are compounds according to formula MC1 where R⁸ is -H; R⁹ is -H; R¹⁰ is -OH, R¹⁶C(=O)O-, or R¹⁶OC(=O)-; and i=1; compounds according to formula MC2 where R¹¹ is phenyl; R⁸ is ―H; R¹² is ―H; R¹³ is - H; j=1, and i=1; compounds according to formula MC3 where R⁸ is - H; R¹⁴ is -OC(=O)CH=CHC(=O)O-; and i=1; compounds according to formula MC4 where R⁹ is - H; and i=1; and compounds according to formula MC5 where R¹⁵ is ―C₂H₅ or 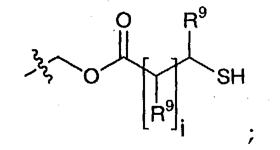 and R⁸ is ―H; and i=1; and compounds according to formula MC6 where R⁸ is -H; and i=1.

Suitable mercaptan-containing organic compounds within the scope of formula MC1 include, for example, the compounds shown in Table 1:

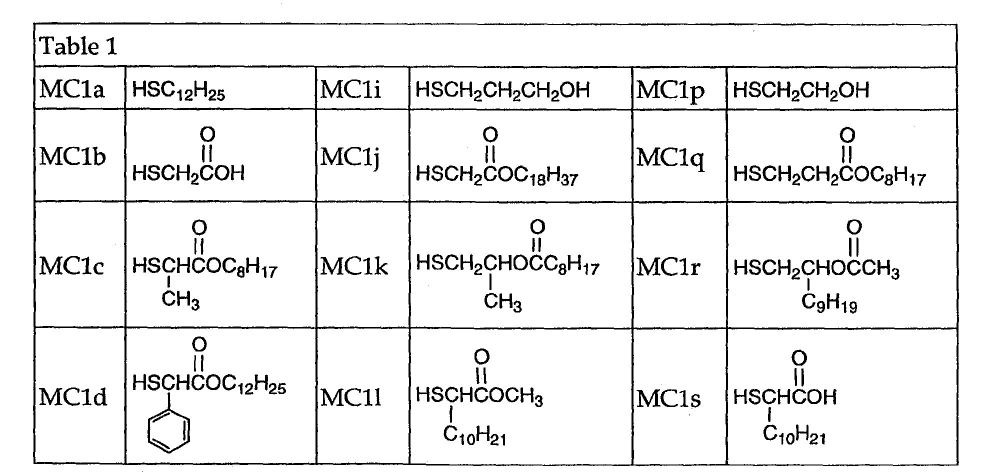

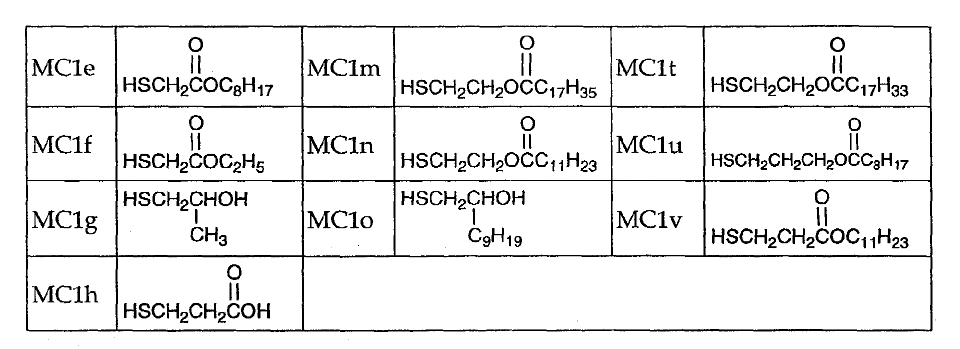

Suitable mercaptan-containing organic compounds within the scope of formula MC2 include, for example, the following compounds:

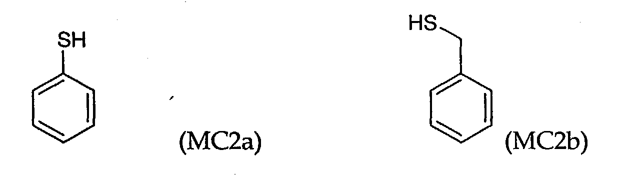

Suitable mercaptan-containing organic compounds within the scope of formula MC3 include, for example, the compounds shown in Table 2:

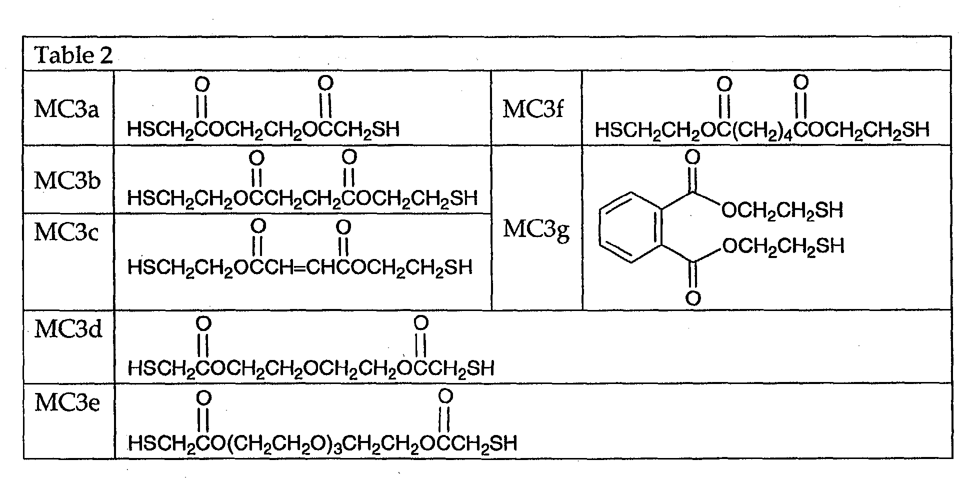

Suitable mercaptan-containing organic compounds within the scope of formula MC4 include, for example, the following compound:

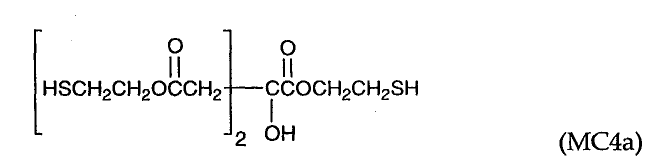

Suitable mercaptan-containing organic compounds within the scope of formula MC5 include, for example, the following compounds:

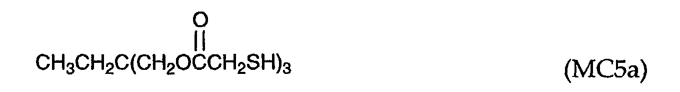

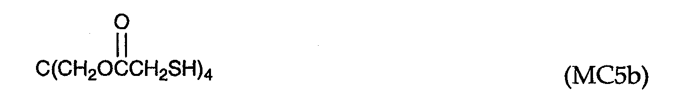

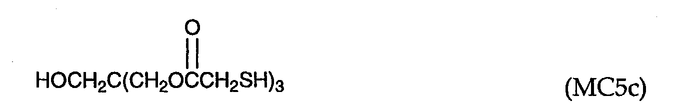

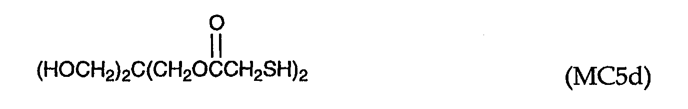

Suitable mercaptan-containing organic compounds within the scope of formula MC6 include, for example, the following compounds:

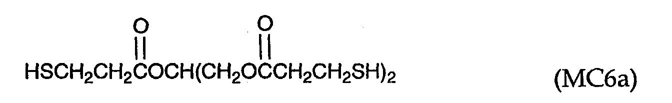

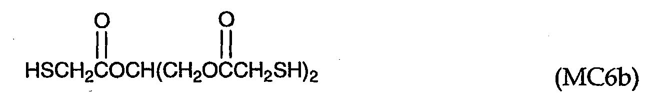

Preferably, the mercaptan-containing organic compound is a mercaptoester or reverse ester as in Formulas MC-1 or MC-2, wherein each R⁹, R¹⁰, or R¹² is independently R¹⁶C(=O)O- or R¹⁶OC(=O)-; or MC-3, MC-4, MC-5, or MC-6. Suitable esters include, for example, stearyl thioglycolate, 2-ethylhexyl thioglycolate, diethylene glycol bis(thioglycolate), and mixtures comprising one or more of the foregoing esters. Suitable reverse esters include, for example, 2-mercaptoethyl stearate, 2-mercaptoethyl caproate, 2-mercaptoethyl tallate, and mixtures comprising one or more of the foregoing reverse esters. A mixture of a mercaptoester and a reverse mercaptoester may be used, for example in an amount comprising 1 weight % (wt%) to about 99 wt% of the mercaptoester and 99 wt% to 1 wt% of the reverse mercaptoester, each based on the total weight of mercaptan-containing organic component.

The amount of mercaptan-containing organic compound will vary depending on the application, and is readily determined by one of ordinary skill in the art, depending on the halogen-containing vinyl polymer formulation, processing method, intended use, and like considerations. In general, a suitable amount of mercaptan-containing organic compound is 0.05 phr to 5.0 phr. Within this range, an amount of greater than or equal to 0.1 phr can be employed, preferably greater than or equal to 0.25 phr, and more preferably greater than or equal to 0.5 phr. Also within this range, less than or equal to 4.0 phr can be employed, preferably less than or equal to 3.0 phr, and more preferably less than or equal to 2.0 phr. Greater than 4.0 phr leads to diminishing results, while less than 0.05 phr does not provide the desired level of stabilization.

Optionally, the stabilizer may include other co-stabilizers such as, for example, epoxy compounds, metallic stabilizers, phosphites, nitrogen-containing stabilizers, other non-metallic stabilizers, polyols, talcites, dawsonites, and mixtures comprising one or more of the foregoing co-stabilizers.

Suitable epoxy compounds include, for example, epoxidized oils such as soybean oil, lard oil, olive oil, linseed oil, peanut oil, castor oil, corn oil, tung oil, cottonseed oil, and mixtures comprising one or more of the foregoing epoxy compounds. Other suitable epoxy compounds include, for example, epichlorhydrin/bis-phenol A resins, butoxypropylene oxide, glycidyl epoxystearate, epoxidized α-olefins, epoxidized glycidyl soyate, epoxidized butyl toluate, glycidol, vinyl cyclo-hexene dioxide; the glycidyl ethers of resorcinol, hydroquinone, 1,5-dihydroxynaphthalene, glycerine, pentaerythritol, and sorbitol; allyl glycidyl ether, butyl glycidyl ether, cyclohexane oxide, 4-(2,3-epoxyproproxy)acetophenone, mesityl oxide epoxide, 2-ethyl-3-propyl glycidamine, and mixtures comprising one or more of the foregoing epoxy compounds. The epoxy may be present in amounts of up to 30 phr.

Suitable phosphites include, for example, trialkylphosphites such as trioctyl phosphite, tridecyl phosphite, tridodecyl phosphite, tri(tetradecyl) phosphite, tricyclohexyl phosphite, tristearyl phosphite, distearyl-pentaerythritol diphosphite, or trioleyl phosphite; triaryl phosphites such as triphenyl phosphite, tricresyl phosphite, or tris-p-nonylphenyl phosphite; alkyldiaryl phosphites such as phenyldidecyl phosphite or (2,4-di-tert-butylphenyl)didodecyl phosphite; dialkylaryl phosphites; thiophosphites such as trithiohexyl phosphite, trithiooctyl phosphite, trithiolauryl phosphite, or trithiobenzyl phosphite; and mixtures comprising any one or more of the foregoing phosphites. The phosphites can be used in an amount of, for example, 0.01 phr to 10 phr, advantageously 0.05 phr to 5 phr, and especially 0.1 phr to 3 phr.

Metallic stabilizers are defined as metal salts and organometallic salts other than zinc salts. Suitable metal salts include, for example, oxides, hydroxides, sulfides, sulfates, chlorides, bromides, fluorides, iodides, phosphates, phenates, perchlorates, carboxylates, and carbonates of metals. The metal salts are exemplified by barium, strontium, calcium, tin, magnesium, cobalt, nickel, titanium, antimony, and aluminum salts of hydrochloric acid, sulfuric acids, phenols, aromatic carboxylic acids, fatty acids, epoxidized fatty acids, oxalic acid, acetic acid, and carbonic acid. Preferred metallic stabilizers include calcium hydroxide, magnesium hydroxide, calcium stearate, calcium 2-ethylhexanoate, calcium octanoate, calcium oleate, calcium recinoaleate, calcium myristate, calcium palmitate, calcium laurate, barium laurate, barium di(nonylphenolate), barium stearate, tin stearate, aluminum stearate, hydrotalcite, and mixtures comprising one or more of the foregoing metal salts. Metallic stabilizers can be present in an amount of up to 2 wt%, preferably 0.1 wt% to 1 wt%, based on the total weight of the halogenated polymer.

Preferred organometallic stabilizers include organotin carboxylates and mercaptides. Suitable organometallic stabilizers include, for example, butyltin tris dodecyl mercaptide, dibutytin dilaurate, dibutyltin didodecyl mercaptide, dianhydride tris dibutylstannate diol, dihydrocarbontin salts of carboxy mercaptals, and mixtures comprising one or more of the foregoing organometallic stabilizers. Monosulfides and/or polysulfides of the organotin mercaptides of mercaptoalkyl carboxylates and/or alkyl thioglycolates, and mixtures comprising one or more of the foregoing, are also suitable as organometallic stabilizers.

Suitable nitrogen-containing stabilizers, include, for example, dicyandiamide, hindered amines, melamine, urea, dimethyl hydantoin, guanidine, thiourea, 2-phenylindoles, aminocrontonates, N-alkyl and N-phenyl substituted maleimides, 1,3-dialkyl-6-amino-uracil derivatives, pyrrolodiazine diones, and mixtures comprising one or more of the foregoing nitrogen-based stabilizers. The nitrogen-based stabilizers can be present in an amount of up to 10 wt%, based on the total weight of the halogen-containing vinyl polymer. Nonmetallic stabilizers further include dilaurylthiodipropionate, distearyl 3,3'-thiopropionate, dibenzyl-3,3'-thiodipropionate, dicyclohexyl-3,3'-thiodipropionate, dioleyl-3,3'-thiodipropionate, didecyl-3,3'-thiodipropionate, diethyl-3,3'-thiodipropionate, lauryl ester of 3-mercaptopropionic acid, lauryl ester of 3-lauryl mercaptopropionic acid, the phenyl ester of 3-octyl mercaptopropionic acid, and mixtures comprising one or more of the foregoing non-metallic stabilizers. The latter non-metallic stabilizers may be present in an amount of up to 0.75 wt%, preferably 0.01wt% to 0.75 wt%, based on the total weight of the halogenated polymer.

Useful sterically hindered amines include, for example, monomeric, oligomeric, or polymeric 2,2,6,6-tetramethylpiperidine compounds. The nitrogen of the piperidine moiety may be substituted by, for example, hydrogen, C₁-C₁₂ alkyl, C₃ -C₈ alkenyl, or C₇-C₁₂ aralkyl. The C-4 carbon of the piperidine moiety may be substituted by, for example, hydrogen or oxygen or nitrogen-containing groups. Suitable 2,2,6,6-tetramethylpiperidine compounds include, for example, 4-hydroxy-2,2,6,6-tetramethylpiperidine, 1-benzyl-4-hydroxy-2,2,6,6-tetramethylpiperidine, 4-stearoyloxy-2,2,6,6-tetramethylpiperidine, 1,2,2,6,6-pentamethylpiperidin-4-yl-beta-(3,5-di-tert-butyl-4-hydroxyphenyl) propionate, di(2,2,6,6-tetramethylpiperidin-4-yl) succinate, 1-acetyl-2,2,6,6-tetramethylpiperidin-4-yl acetate, trimellitic acid tri(2,2,6,6-tetramethylpiperidin-4-yl) ester, and mixtures comprising one or more of the foregoing compounds. The piperidines can be used in an amount of, for example 0.01 phr to 1 phr, advantageously at least about 0.1 phr or less than 0.5 phr.

Suitable polyols include, for example, pentaerythritol, dipentaerythritol, tripentaerythritol, bistrimethylolpropane, trimethylolpropane, inosite, polyvinyl alcohol, sorbitol, mannitol, lactose, tris(hydroxyethyl)isocyanurate, tetramethylolcyclohexanol, tetramethylolcyclopyranol, glycerol, diglycerol, polyglycerol, 1,3,5-tris(2-hydroxyethyl)cyanuric acid, and mixtures comprising at least one of the foregoing. Preferred polyols include, for example, sorbitol and trimethylolpropane. The polyols can be used in an amount of, for example, 0.01 phr to 20 phr, advantageously at least about 0.1 phr or less than 10 phr.

As used herein, the term halogen-containing vinyl polymer means a halogen-containing polymer in which the halogen(s) is attached directly to a carbon atom. The halogen-containing polymers include, for example, chlorinated polyethylene having about 14 % to about 75%, e.g. about 27%, chlorine by weight, chlorinated natural and synthetic rubber, rubber hydrochloride, chlorinated polystyrene, chlorinated poly(vinylidine chloride), chlorinated poly(vinyl chloride), poly(vinyl bromide), poly(vinyl fluoride), other vinyl chloride polymers, and mixtures comprising one or more of the foregoing polymers. The vinyl chloride polymers known as polyvinyl chloride (PVC) are made from vinyl chloride monomers alone or a mixture of monomers comprising, preferably, at least about 70% by weight of vinyl chloride, based on the total monomer weight. Suitable co-monomers include, for example, vinyl acetate, vinyl butyrate, vinyl benzoate, vinylidene chloride, trichloroethylene, 1-fluoro-2-chloroethylene, diethyl fumarate, diethyl maleate, methyl acrylate, 2-ethylhexyl acrylate, methyl alpha-chloroacrylate, butyl acrylate, methyl methacrylate, ethyl methacrylate, butyl methacrylate, styrene, vinyl ketones such as vinyl methyl ketone and vinyl phenyl ketone, acrylonitrile, chloroacrylonitrile, allylidene diacetate, chloroallylidene diacetate, and vinyl ethers such as vinyl ethyl ether, vinyl phenyl ether, the vinyl ether prepared by the reaction of one mole of acrolein with one mole of ethylene glycol divinyl ether, and mixtures comprising one or more of the foregoing co-monomers. Suitable halogen-containing vinyl copolymers include, for example, vinyl chloride-vinyl acetate, vinyl chloride-vinyl acetate (87:13), vinyl chloride-vinyl acetate-maleic anhydride (86:13:1), vinyl chloride-vinylidene chloride (95:5); vinyl chloride-diethyl fumarate (95:5), vinyl chloride 2-ethylhexyl acrylate (80:20), and mixtures comprising one or more of the foregoing copolymers.

A rigid halogen-containing vinyl polymer composition is one that does not contain a plasticizer. A semi-rigid halogen-containing vinyl polymer composition contains 1 to 25 parts of a plasticizer per 100 parts by weight of the halogen-containing vinyl polymer. A flexible halogen-containing vinyl polymer composition contains 25 to 100 parts of a plasticizer per 100 parts by weight of the halogen-containing vinyl polymer. Suitable plasticizers include, for example, alkyl esters of polyacids in which there are from 1 to 3 alkyl groups having from 8 to 12 carbon atoms. Suitable alkyl groups of the alkyl ester include, for example, n-octyl, 2-ethylhexyl, decyl, dodecyl, and mixtures comprising one or more of the foregoing alkyl groups. Suitable polyacids for the alkyl ester include, for example, phthalic acid, trimellitic acid, benzoic acid, adipic acid, sebacic acid, glutaric acid, phosphates, and mixtures comprising one or more of the foregoing acids. Polymeric plasticizers are also suitable.

Suitable fillers include, for example, calcined clays, calcium carbonate, talcs, dolomite, wollastonite, magnesium oxide, magnesium hydroxide, silicates, glass fibers, kaolin, chalk, mica, metal oxides, metal hydroxides, carbon black, graphite, and mixtures comprising one or more of the foregoing fillers.

The amount of filler added is 1.0 phr to 30 phr. Within this range, an amount of greater than or equal to 2.0 phr can be employed, preferably greater than or equal to 3.0 phr, and more preferably greater than or equal to 4.0 phr. Also within this range, less than or equal to 30 phr can be employed, preferably less than or equal to 15 phr, and more preferably less than or equal to 10 phr.

Optionally, the halogen-containing polymer compositions may include other conventional additives such as, for example, antioxidants, lubricants, pigments, impact modifiers, processing aids, blowing agents, dyes, ultraviolet light absorbing agents, densifying agents, biocides, and mixtures comprising one or more of the foregoing additives. Suitable amounts of the foregoing additives are readily determined by one of ordinary skill in the art depending on the desired final properties and end use of the compositions. In general, each additive is present in an amount of 0.01 to 10 wt%, preferably 0.1 to 5 wt%, based on the total weight of the halogen-containing vinyl polymer.

Suitable antioxidants include, for example, phenolic antioxidants such as 2,6-di-t-butyl-p-cresol, butylated hydroxyanisole, 4,4'-thiobis(6-t-butyl-m-cresol), 4,4'-cyclohexylidenediphenol, 2,5-di-t-amyl hydroquinone, 4,4'-butylidene bis(6-t-buytl-m-cresol), hydroquinone monobenzyl ether, 2,2'-methylene-bis(4-methyl-6-t-butyl phenol), 2-t-butyl-4-dodecyloxy phenol, p-amino phenol, N-lauryloxy-p-amino phenol, 4,4'-thiobis(3-methyl-6-t-butyl phenol), bis [o-(1,1,3,3-tetramethyl butyl)phenol] sulfide, 4-dodecyoxy-2-hydroxybenzophenone, n-dodecyl ester of 3-hydroxy-4-(phenyl carbonyl)phenoxyacetic acid, t-butyl phenol, and mixtures comprising one or more of the foregoing antioxidants.

Suitable lubricants include, for example, paraffin waxes, salts of fatty acids, low molecular weight polyethylene (i.e., polyethylene wax), fatty acid amides (i.e., laurimide and stearamide), bis amides (i.e., decamethylene, bisamide), fatty acid esters (e.g., butyl stearate, glyceryl stearate, linseed oil, palm oil, decyloleate, corn oil, cottonseed oil, and the like), and mixtures comprising one or more of the foregoing lubricants. Suitable pigments include, for example, titanium dioxide, carbon black, iron oxide, and mixtures comprising one or more of the foregoing pigments.

In general, the above-described thermal stabilizer compositions are provided as a one-part mixture formulated so as to provide one or more zinc salts and at least one of one or more mercaptan-containing organic compounds. As other optional additives may also be present in the one-part mixture, the particular amount of each component may vary from 0.1 to 99.9% percent by weight, preferably 1.0 to 99.0% by weight based on the total weight of the one-part mixture. Particular amounts effective to result a synergistic improvement in thermal stability are readily determined by one of ordinary skill in the art. Preferably, early color is improved for at least 3 minutes at temperatures up to 350°C, preferably at least 5 minutes at 350°C.

The halogen-containing vinyl polymer compositions may be prepared by blending under low or high shear. Likewise, the thermal stabilizer compositions may be incorporated in the halogen-containing vinyl polymer composition by mixing the components thereof and the polymer in an appropriate mill or mixer or by another method that provides uniform distribution of the stabilizer throughout the polymer. Depending on the compatibility and physical state (i.e., liquid or solid) the components of the blend may require heating to form a uniform stabilized polymer composition having the desired performance characteristics.

The stabilized halogen-containing vinyl polymer composition can be used to form a variety of rigid articles such as, for example, house siding, window profiles, and pipe using a variety of techniques to shape the articles such as, for example, molding, extrusion, and injection molding.

### EXAMPLES

The invention is further illustrated by the following examples, wherein PVC compositions for thermal stability testing were prepared by mixing, under high shear, 100 parts by weight of the PVC resin, filler (3.0 phr calcium carbonate), pigment (0.5 phr), mold release agents (0.5-2 phr), co-stabilizer (1-10 phr epoxidized soybean oil, and/or calcium stearate), plasticizers (diisodecyl phthalate) and lubricants (0.2 to 2.0 phr), together with the stabilizer compositions shown in the Table. The mixed compositions were then heated in a two-roll mill at 390°F (199°C) and samples were removed at the indicated time intervals and formed into chips. Color change (as reflected by dE) and yellowness (YI) of each chip was measured using a Hunter Labs (L, a, b) colorimeter.

Examples 1-8 show the effects of a stabilizer composition comprising a mercaptan-containing organic compound and varying amounts of a zinc metal, as provided by zinc laurate, on polyvinyl chloride resin.

**Table 1**

| **Component** | **Example No.** | | | | | | | |
|---|---|---|---|---|---|---|---|---|
| | **1*** | **2*** | **3** | **4** | **5** | **6** | **7** | **8** |
| Zinc laurate** | 0.002 | 0.05 | 0.075 | 0.1 | 0.125 | 0.15 | 0.175 | 0.2 |
| Stearyl thioglycolate | 2.0 | 2.0 | 2.0 | 2.0 | 2.0 | 0.5 | 0.5 | 0.5 |
| dE at minute | **1*** | **2*** | **3** | **4** | **5** | **6** | **7** | **8** |
| 2 | 27.1 | 13.6 | 13.4 | 13.5 | 13.4 | 13.5 | 13.2 | 13.4 |
| 4 | 42.0 | 13.9 | 13.9 | 13.9 | 14.1 | 13.8 | 13.6 | 13.9 |
| 6 | 52.3 | 14.2 | 14.2 | 14.3 | 14.2 | 14.2 | 14.0 | 14.5 |
| 8 | 58.8 | 14.8 | 14.8 | 14.9 | 15.0 | 14.8 | 14.7 | 15.2 |
| 10 | 62.8 | 15.7 | 15.7 | 15.7 | 16.0 | 16.0 | 15.8 | 16.3 |
| 12 | ----- | 16.9 | 16.7 | 17.0 | 17.5 | 17.6 | 17.5 | 17.7 |
| 14 | ----- | 23.9 | 21.1 | 19.0 | 19.4 | 19.1 | 18.8 | 19.8 |
| 16 | ----- | 30.7 | 25.0 | 21.7 | 21.9 | 21.5 | 21.1 | 21.8 |
| 18 | ----- | 37.4 | 29.7 | 25.4 | 24.9 | 24.8 | 23.2 | 25.7 |
| 20 | ----- | ----- | 35.9 | 30.8 | 29.5 | 28.4 | 27.7 | 30.2 |
| YI at minutes | 1* | 2* | 3 | 4 | 5 | 6 | 7 | 8 |
| 2 | 42.8 | 4.7 | 4.8 | 4.9 | 4.9 | 5.1 | 5.0 | 5.6 |
| 4 | 78.8 | 6.3 | 6.4 | 6.4 | 6.8 | 6.9 | 6.7 | 7.4 |
| 6 | 104.3 | 8.2 | 8.4 | 8.7 | 8.5 | 9.0 | 8.7 | 9.9 |
| 8 | 119.3 | 10.2 | 10.3 | 10.5 | 11.0 | 11.1 | 11.1 | 12.6 |
| 10 | 127.4 | 12.8 | 12.9 | 12.7 | 13.4 | 14.1 | 14.3 | 15.3 |
| 12 | ----- | 15.9 | 15.4 | 15.9 | 16.6 | 16.8 | 16.9 | 17.2 |
| 14 | ----- | 32.8 | 25.1 | 19.4 | 19.8 | 18.9 | 18.6 | 19.9 |
| 16 | ----- | 48.4 | 34.5 | 24.6 | 24.3 | 23.0 | 21.7 | 22.8 |
| 18 | ----- | 62.7 | 44.7 | 32.3 | 29.8 | 28.2 | 25.0 | 29.4 |
| 20 | ----- | ----- | 56.3 | 43.1 | 38.0 | 33.9 | 32.4 | 36.2 |

| | | | | | | | | |
|---|---|---|---|---|---|---|---|---|
| *Comparative Examples | | | | | | | | |
| ++Reported phr based on zinc metal | | | | | | | | |

The data in Table 1 clearly shows that less than 0.05 parts by weight of the zinc does not result in satisfactory stabilization, particularly for long-term color hold. Better stabilization is achieved at 0.075 parts by weight of zinc, and at 0.1 parts by weight of zinc (which is double that taught by Zaremsky), where acceptable color is observed up to about 20 minutes at 199°C.

## Claims

1. A stabilized polymeric composition comprising
a halogen-containing vinyl polymer;
a filler;
a mercaptan-containing organic compound; and
a zinc salt in an amount effective to provide 0.075 to 1.5 parts by weight of zinc metal per 100 parts by weight of the halogen-containing vinyl polymer.

2. The stabilized polymeric composition of Claim 1, wherein the mercaptan-containing organic compound is a mercaptoester, a reverse mercaptoester, or a mixture comprising at least one of the foregoing esters.

3. The stabilized polymeric composition of Claim 1 or 2, wherein the zinc salt is a zinc carboxylate, a zinc enolate, a zinc phenolate, or a mixture comprising at least one of the foregoing zinc salts.

4. The stabilized polymeric composition of Claim 1, comprising, based on 100 parts by weight of the halogen-containing vinyl polymer, 1.0 to 30 parts by weight of the filler, and 0.05 to 4 parts by weight of the mercaptan-containing organic compound.

5. The stabilized polymeric composition of Claim 1 or 4, wherein the zinc salt is a zinc carboxylate; and the mercaptan-containing organic compound is a mercaptoester, a reverse mercaptoester, or a mixture comprising at least one of the foregoing esters.

6. The stabilized polymeric composition of Claim 1 or 4, wherein the zinc salt is a salt of a saturated or unsaturated, straight or branched chain alkyl group having 1 to 17 carbon atoms; and the mercaptan-containing organic compound is stearyl thioglycolate, 2-ethylhexyl thioglycolate, diethylene glycol bis(thioglycolate), 2-mercaptoethyl stearate, 2-mercaptoethyl caproate, 2-mercaptoethyl tallate, or a mixture comprising at least one of the foregoing esters.

7. A method of stabilizing a halogen-containing vinyl polymer comprising a filler, the method comprising adding to the halogen-containing vinyl polymer a mercaptan-containing organic compound; and a zinc salt in an amount effective to provide 0.075 to 1.5 parts by weight of zinc metal per 100 parts by weight of the halogen-containing vinyl polymer.

8. An article comprising the composition of Claim 1.

9. The article of Claim 8, wherein the article is a pipe, a window casing, siding, a bottle, wall covering or packaging film.

10. A stabilizer composition comprising a mercaptan-containing organic compound and a zinc salt in an amount effective to provide 0.075 to 1.5 parts by weight of zinc metal per 100 parts by weight of a halogen-containing vinyl polymer.
